# EUROPÄISCHE PATENTSCHRIFT

(11) **EP 3 060 901 B1**
(45) Veröffentlichungstag und Bekanntmachung des Hinweises auf die Patenterteilung: **02.08.2017**
(21) Anmeldenummer: 14801907.8
(22) Anmeldetag: 15.10.2014
(51) Int. Cl.: G01N 21/64, G01N 21/77, G01J 3/44, G01N 31/22, G01J 3/02

(54) **OPTOCHEMISCHER SENSOR**
OPTOCHEMICAL SENSOR
CAPTEUR OPTOCHIMIQUE

(30) Priorität: 23.10.2013 AT 3452013 U
(43) Veröffentlichungstag der Anmeldung: 31.08.2016
(73) Patentinhaber: Tecsense GmbH, 8075 Grambach (AT)
(72) Erfinder: RIBITSCH, Volker, A-8010 Graz (AT); KROTTMAIER, Johannes, A-8301 Hart bei Graz (AT)
(74) Vertreter: Cunow, Gerda
(86) Internationale Anmeldenummer: PCT/AT2014/000184
(87) Internationale Veröffentlichungsnummer: WO 2015/058221

(56) Entgegenhaltungen:
- US-A1- 2002 164 813
- US-A1- 2005 237 518
- US-A1- 2006 197 960
- US-A1- 2008 180 673
- US-B1- 6 448 064

## Beschreibung

Die vorliegende Erfindung bezieht sich auf einen optochemischen Sensor umfassend ein mit Licht einer Anregungslichtquelle anregbares, mit einem Messmedium in Kontakt befindliches Messelement sowie eine Messanordnung umfassend wenigstens eine Anregungslichtquelle und einen Detektor sowie eine eine die Messanordnung von dem Messelement trennende Abdeckhaube, eine parallel zu dem Messelement angeordnete Grundplatte, und wobei die Anregungslichtquelle und der Detektor auf die Grundplatte festgelegt sind, wobei die Anregungslichtquelle und der Detektor durch zumindest einen Teil der Materialstärke der Abdeckhaube voneinander getrennt sind, wobei die Messanordnung einen als Lichtleiter ausgebildeter Bereich der Abdeckhaube, oder einen im Inneren dieses Bereichs der Abdeckhaube gesonderter Lichtwellenleiter, umfasst, wobei Licht von der Anregungslichtquelle durch den als Lichtleiter ausgebildeten Bereich in einem derartigen Winkel auf das Messelement auftrifft, dass von dem Messelement emittiertes Fluoreszenzlicht senkrecht auf den Detektor auftrifft.

Optochemische Sensoren werden zur Messung von unterschiedlichsten Fluiden, wie Gasen, Flüssigkeiten oder auch Mischungen derselben sowohl im medizinischen, biologischen oder biochemischen Bereichen als auch in Lebensmittel- und sonstigen Labor- oder Industriebereichen vermehrt eingesetzt, um das Vorhandensein oder die Abwesenheit von bestimmten Substanzen rasch und zuverlässig detektieren zu können. Als Gase, deren An- oder Abwesenheit mit derartigen Sensoren bestimmt werden, sind beispielsweise Sauerstoff, CO₂, aber auch beispielsweise Ozon oder Ammoniak anzuführen. Weiterhin können mit derartigen Sensoren beispielsweise im medizinischen Bereich durch Messung von Biomolekülen oder pathogenen Stoffen bestimmte Rückschlüsse auf beispielsweise die Wundheilung, die Verunreinigung von Wunden, die An- oder Abwesenheit von bestimmten Erregern oder dgl. gezogen werden, indem sie beispielsweise zur Messung des pH-Werts, welcher für die Rückschlüsse auf derartige Vorgänge herangezogen werden kann, eingesetzt werden.

Das Funktionsprinzip von optochemischen Sensoren beruht im Prinzip auf der Basis einer Wechselwirkung eines durch Licht anregbaren Stoffes mit dem zu vermessenen Analyten, wobei die anregbare Substanz mit Licht einer bestimmten geeigneten Wellenlänge angeregt wird und die Moleküle nach ihrer Anregung bei der Rückkehr in ihren ursprünglichen Zustand die aufgenommene Energie in Form von Fluoreszenzlicht abgeben, welches Fluoreszenzlicht durch Wechselwirkungen mit dem Analyten gelöscht wird. Um eine derartige Fluoreszenzlöschung detektieren zu können, ist es erforderlich, dass das Fluoreszenzlicht einerseits eine ausreichende Intensität aufweist, und andererseits das nicht gelöschte Fluoreszenzlicht auf einen Detektor reflektiert wird, welcher aus der Messung der Intensität des Lichts die An- oder Abwesenheit eines Analyten detektiert.

Die durch das eingestrahlte Licht anzuregende Substanz ist üblicherweise ein sogenannter Fluorophor, welcher während des Einsatzes eines derartigen optochemischen Sensors entweder in direktem Kontakt mit der zu messenden Substanz steht oder aber mit einer für die zu detektierenden Substanz durchlässigen Abdeckung gegenüber schädlichen Umwelteinflüssen geschützt ist. Während eines Betriebs eines derartigen Sensors wird der Fluorophor üblicherweise von der der zu messenden Substanz abgewandten Seite bestrahlt, angeregt und das nicht gelöschte Fluoreszenzlicht auf einen geeigneten Detektor, welcher ebenfalls von der zu vermessenden Probe abgewandt bzw. in einem gegenüber der zu vermessenden Probe geschützten Gehäuse vorgesehen ist, aufgenommen bzw. eingefangen, gegebenenfalls verstärkt und in der Folge gemessen wird.

Insbesondere bei Einsatz von derartigen Sensoren im medizinischen oder biologischen Bereich ist es wesentlich, dass die Sensoren möglichst klein dimensioniert sind und dass sie bevorzugt in sogenannten Mikrogesamtanalystensystemen zum Einsatz gelangen können.

Insbesondere die Frage der Größe derartiger Sensoren ist somit immer wichtiger geworden, da sich nicht nur der Einsatzbereich von derartigen Sensoren in letzter Zeit drastisch erweitert hat, sondern beispielsweise auch versucht wird, in kleinbauenden, beispielsweise medizinischen Geräten neben den weiteren erforderlichen Tätigkeiten, wie beispielsweise im Falle eines Katheters, das Einbringen von Werkzeugen in Wunden, von optischen Einrichtungen, um den Zustand vor Ort beobachten zu können oder dgl. auch direkt und ohne besonderen Aufwand beispielsweise die An- und Abwesenheit von zu untersuchenden Analyten nachweisen zu können, hat es sich als besonders wesentlich und wichtig erwiesen, dass derartige Sensoren miniaturisiert werden bzw. gegebenenfalls so kleinbauend ausgebildet werden können, dass sie in Mikrochips integriert oder auf Leiterplatten festgelegt werden können, was mit gegenwärtig zur Verfügung stehenden Systemen nicht erreicht werden kann.

Wenn derartige optochemische Sensoren in Chips integriert werden, stellt es ein regelmäßig auftretendes Problem bei den Sensoren dar, dass eine Trennung des Fluoreszenzlichts von dem Anregungslicht mittels eines Spektrometers oder mittels optischer Filter geschehen muss, was sich als nicht zufriedenstellend erwiesen hat, da die Intensität des Anregungslichts üblicherweise bedeutend höher als die Intensität des erzeugten Fluoreszenzlichts ist, was insbesondere bei miniaturisierten Systemen ein Problem in Bezug auf die Messgenauigkeit darstellt, da Streulicht die Messung stören bzw. verfälschen kann.

Die US 20008/0180673 A1 beschreibt ein Testsystem beinhaltend ein optisches Medium, ein Bindungsagens ebenso wie einen Lichtdetektor. Das optische Medium stellt hierbei einen Lichtpfad zur Verfügung und das Bindungsagens ist derart positioniert, dass es einen Zielkomplex in einem evaneszierenden Feld, das durch die Ausbreitung des Lichts entlang des Lichtpfads ausgebildet wird, hält. Durch die Wechselwirkung des Komplexes mit dem evaneszierenden Felds wird Licht emittiert, welches auf einen zur Detektion des Lichts positionierten Detektor auftrifft.

Der US 6,448,064 B1 ist ein Miniatur-DNA-Biosensor entnehmbar, der so ausgebildet ist, um spezifische molekulare Ziele, wie Nukleinsäuren zu detektieren. Der miniaturisierte Biosensor ist hierbei ein Chip, umfassend eine Mehrzahl von biologischen Sensorelementen, Anregungsmikrolaser, einen Probenwellenleiter, der mit optischen Detektoren versehen ist, integrierte elektro-optische Elemente und einen biotelemetrischen Radiofrequenzsignalgenerator. Eine derartige Vorrichtung ist zur Genanalyse geeignet.

Der US 2005/0237518 A1 ist eine optische Sensorvorrichtung zum Bestimmen der Anwesenheit oder Konzentration eines Analyten entnehmbar, beinhaltend einen Wellenleiter, der über einer Lichtquelle angeordnet ist und einen Lichtdetektor, der auf einer Oberfläche eines Substrats angeordnet ist und von der Lichtquelle getrennt ist, wobei der Wellenleiter eine Dicke aufweist, die einem Fernfeldemissionspunkt der Lichtquelle entspricht. Eine Analytenindikatormatrix ist weiterhin auf der Außenoberfläche des Wellenleiters angeordnet.

Der US 2002/0164813 A1 ist eine elektro-optische Sensorvorrichtung zum Detektieren der Anwesenheit und Konzentration eines Analyten in einem flüssigen oder gasförmigen Medium entnehmbar, wobei die Vorrichtung ein Paar von Indikatorelementen aufweist, die positioniert sind, um Strahlung von einer Strahlungsquelle zu erhalten und die Strahlung auf ein Paar von photoempfindlichen Elementen zu übertragen.

Die US 2006/0197960 A1 offenbart schließlich einen Biochip zum Testen von biologischen Substanzen, umfassend eine Mehrzahl von Bindungsstellen, optischen Mitteln zum Bestimmen eines spezifischen Bindungsereignisses an jeder der Bindungsstellen, wobei die Mehrzahl von Bindungsstellen und die Mittel zum Bestimmen in einen einzigen Chip integriert sind, welcher elektrisch versorgt ist und elektrische Signale in Antwort auf die Bindungsereignisse an jeder Bindungsstelle produziert.

Der vorliegenden Erfindung liegt daher die Aufgabe zugrunde, einerseits einen gegenüber möglichen Störeinflüssen dichten und unempfindlichen optochemischen Sensor zur Verfügung zu stellen und andererseits das Sensordesign so weit zu miniaturisieren, dass es auch in klein- bzw. kleinstbauende Einrichtungen, wie Chips oder Leiterplatten integriert werden kann.

Zur Lösung dieser Aufgabe ist der erfindungsgemäße Sensor im Wesentlichen dadurch gekennzeichnet, dass die Messanordnung, eine auf der Grundplatte von der Anregungsquelle und dem Detektor beabstandet angeordnete Referenzlichtquelle umfasst, deren Referenzlicht an der Innenseite der Abdeckhaube reflektiert und auf den Detektor auftrifft, wobei die Referenzlichtquelle auf der Grundplatte von der Anregungslichtquelle und dem Detektor beabstandet angeordnet ist, dass die Anregungslichtquelle, der Detektor und die Referenzlichtquelle auf einer Achse angeordnet sind, und dass die Abdeckhaube lösbar an der Grundplatte festgelegt ist. Indem die Ausbildung so getroffen ist, dass die Anregungslichtquelle und der Detektor auf einer parallel zu dem Messelement angeordneten Grundplatte festgelegt sind, gelingt es, die Bauhöhe des optochemischen Sensors so weit als möglich zu reduzieren und indem weiterhin die Abdeckhaube die Anregungslichtquelle durch zumindest einen Teil ihrer Materialstärke von dem Detektor trennt, wird nicht nur eine geometrische Trennung der Element zur Verfügung gestellt, sondern überdies sichergestellt, dass unabhängig von der Intensität des Anregungslichts ein Störlichteinfluss desselben mit Sicherheit hintangehalten ist, wodurch die Messgenauigkeit des Systems gegenüber herkömmlichen Systemen trotz der kleinbauenden Anordnung der Elemente des Sensors erhöht wird. Indem weiterhin Licht von der Anregungslichtquelle durch einen Lichtleiter in einem derartigen Winkel auf das Messelement auftrifft, dass das von dem Messelement emittierte Fluoreszenzlicht senkrecht auf den Detektor auftrifft, wird sichergestellt, dass einerseits die Bauhöhe der gesamten Einrichtung weiter verringert wird, und überdies die Lichtausbeute des Fluoreszenzlichts maximiert und somit die Messgenauigkeit erhöht wird. Indem der Sensor so ausgebildet ist, dass auf der Grundplatte von der Anregungslichtquelle und dem Detektor beabstandet eine Referenzlichtquelle angeordnet ist und dass die Anregungslichtquelle, der Detektor und die Referenzlichtquelle auf einer Achse angeordnet sind, kann mit ein und demselben Detektor sowohl Anregungslicht als auch Referenzlicht gemessen werden, wodurch beispielsweise Veränderungen der Reflexionsintensität, gemessen werden können, wodurch die Messgenauigkeit der Einrichtung gegenüber herkömmlichen Einrichtungen weiter erhöht werden kann. Indem weiterhin die Anregungslichtquelle, der Detektor und die Referenzlichtquelle auf einer Achse angeordnet sind, ist sichergestellt, dass es zu keinen Störlichteinflüssen zwischen Anregungslichtquelle und Referenzlichtquelle kommt, da diese beiden Lichtquellen räumlich voneinander, insbesondere durch den dazwischen eingebauten Detektor und wenigstens einem Teil der Abdeckhaube getrennt sind. Für eine besonders einfache Handhabbarkeit des optochemischen Sensors ist dieser so ausgebildet, dass die Abdeckhaube lösbar an der Grundplatte festgelegt ist. Mit einer derartigen Ausbildung können beispielsweise einzelne Elemente, welche auf der Grundplatte festgelegt sind, beispielsweise der Detektor oder die Abdeckhaube selbst, problemlos ausgetauscht werden, wodurch die gesamte Standzeit des Sensors verlängert ist.

Gemäß einer Weiterbildung der Erfindung ist der optochemische Sensor so ausgebildet, dass die Anregungslichtquelle in die Materialstärke der Abdeckhaube eingelassen ist. Mit einer derartigen Ausbildung wird jegliches unbeabsichtigtes Streulicht von der Anregungslichtquelle in Richtung Detektor bzw. ins Innere des optochemischen Sensors mit Sicherheit verhindert und überdies kann jener Teil der Abdeckhaube, in welchen die Anregungslichtquelle integriert ist, beispielsweise gegenüber der restlichen Abdeckhaube mit einer größeren Materialstärke ausgebildet werden, die Verspiegelungen aufweist, um beispielsweise gegebenenfalls vorhandenes Streulicht zu reflektieren und überdies eine effektive Trennung von Anregungslichtquelle und Detektor zur Verfügung stellen.

Indem, wie dies einer Weiterbildung der Erfindung entspricht, der Sensor so ausgebildet ist, dass ein zwischen Anregungslichtquelle und Messelement liegender Bereich der Abdeckhaube eine geglättete Oberfläche aufweist und als Lichtwellenleiter ausgebildet ist, gelingt es, einen Teil der Abdeckhaube unmittelbar als Lichtwellenleiter zu verwenden, so dass der optochemische Sensor nicht nur apparativ bzw. baulich deutlich vereinfacht werden kann, sondern auch weiter miniaturisiert werden kann. Weiterhin kann mit einer derartigen Ausbildung die Generierung von jeglichem Streulicht effektiv vermieden werden.

Hierbei gelingt es, wie dies einer Weiterbildung der Erfindung entspricht, den Sensor so auszugestalten, dass das Messelement unmittelbar auf einem Endbereich der den Lichtwellenleiter ausbildenden Glasfaserelemente aufgebracht ist und dass die Abdeckhaube wenigstens teilweise aus Glas und/oder Glasfasern enthaltendem Polycarbonat gebildet ist. Mit einer derartigen Ausbildung kann der Sensor unmittelbar auf dem Endbereich von den Lichtwellenleiter ausbildenden Glasfaserelementen aufgebracht sein, wodurch beispielsweise bei einem für mehrere Zwecke einsetzbaren Element, wie beispielsweise einem Katheter neben den für den Betrieb desselben erforderlichen Elementen ein Teil der Glasfaserkabel als Lichtwellenleiter für den optochemischen Sensor verwendet werden kann. Indem weiterhin die Abdeckhaube wenigstens teilweise aus Glas oder aus Glasfasern enthaltenem Polycarbonat gebildet ist, kann bei einer derartigen Ausbildung der gesamte Sensor im Endbereich der Glasfaserkabeln ausgebildet sein, wodurch nur eine minimale bauliche Vergrößerung eines Glasfaserbündels, welches beispielsweise in einem Katheter für einen chirurgischen oder mikrochirurgischen Einsatz ausgebildet ist, erreicht wird.

Indem, wie dies einer Weiterbildung der Erfindung entspricht, der optochemische Sensor so weitergebildet ist, dass eine Innenoberfläche der Abdeckhaube als monodirektionale Strahlsperre ausgebildet ist oder eine monodirektionale Strahlsperre aufweist, wird sichergestellt, dass Referenzlicht nicht unbeabsichtigt aus dem optochemischen Sensor austritt bzw. in das zu detektierende Fluid gelangt. Weiterhin gelingt es mit einer derartigen Ausbildung sicherzustellen, dass Licht von der Detektionslichtquelle die Messung mittels des Messelements und dem Detektor nicht nachteilig beeinflussen kann, sondern dass das Licht der Referenzlichtquelle unmittelbar und vollständig auf den Detektor reflektiert wird und somit als Vergleichssignal für die Messung zur Verfügung steht.

Gemäß einer Weiterbildung der Erfindung ist der optochemische Sensor so gefertigt, dass die Innenoberfläche der Abdeckhaube verspiegelt oder mit einer für Licht von der Referenzlichtquelle total reflektierenden Schicht bedampft ist. Durch Vorsehen einer Verspiegelung an der Innenfläche bzw. polierten Oberfläche der Abdeckhaube wird eine Totalreflexion des Lichts der Referenzlichtquelle sichergestellt bzw. in gleicher Weise, indem die Innenoberfläche der Abdeckhaube mit einem Licht von der Referenzlichtquelle total reflektierenden Schicht bedampft ist. Durch eine derartige Ausbildung gelingt nicht nur die Totalreflexion des Lichts der Referenzlichtquelle auf den Detektor, sondern es wird überdies sichergestellt, dass eine Vergrößerung der Baumaße des gesamten optochemischen Sensor hintangehalten wird, so dass der Sensor als solcher extrem kleinbauend bleibt und somit in kleinbauende elektrische bzw. elektronische Einrichtungen, wie beispielsweise mikrochirurgische Elemente und Sonden, Katheter und dgl. eingebaut werden kann.

Um gleichzeitig sicherzustellen, dass nicht in unbeabsichtigter Weise Licht von dem Messelement bzw. Fluorophor reflektiert bzw. teilweise in die zu untersuchende Probe abgegeben oder reflektiert wird, ist der optochemische Sensor dahingehend weitergebildet, dass die Abdeckhaube im Bereich des Messelements mit einer aufgerauten, für Fluoreszenzlicht durchlässigen Außenoberfläche ausgebildet ist. Mit einer derartigen Ausbildung kann allein durch Wahl der Glätte der Außenoberfläche der Abdeckhaube sichergestellt werden, dass gewisse Bereiche derselben für Licht bestimmter Wellenlängen durchlässig sind oder Fremdlicht jedenfalls reflektieren, wodurch die Baumaße des gesamten Sensors weiter verringert werden können. Überdies gelingt es mit einer aufgerauten Oberfläche im Bereich des Messelements eine festere Anhaftung bzw. Verbindung der in dem Messelement enthaltenen Polymere mit der Haube zur Verfügung zu stellen, wodurch die Haltbarkeit des Sensors deutliche erhöht wird.

Um jedenfalls ein unbeabsichtigtes Ablösen des Messelements von der Abdeckhaube mit Sicherheit hintanzuhalten, ist neben den obigen Maßnahmen die Erfindung dahingehend weitergebildet, dass das Messelement aus einem in einem mit einem Material der Abdeckhaube vernetzbaren einen Fluorophor enthaltenden, insbesondere gelöst enthaltenden Basismaterial gebildet ist. Als derartige Materialien, welche eine Vernetzung des Messelements mit der Abdeckhaube sicherstellen können, sind Basismaterialien bestehend aus Kieselsäureethylester (PEOS) und/oder Tetraethylorthosilikat (TEOS) gewählt. In ein derartiges Basismaterial des Messelements wird, wie dies allgemeiner Stand der Technik ist, ein Fluorophor in einer bestimmten Menge eingemischt, um die entsprechenden, gewünschten Fluoreszenzeigenschaften zur Verfügung stellen zu können.

Für eine besonders kleinbauende Vorrichtung kann, wie dies einer Weiterbildung der Erfindung entspricht, der optochemische Sensor so ausgebildet sein, dass das Messelement als geteiltes Messelement enthaltend zwei gegebenenfalls voneinander verschiedene Fluorophore ausgebildet ist. Mit einer derartigen Ausbildung können gleichzeitig zwei verschiedene Analyten gemessen werden, wodurch rasch und zuverlässig mehrere Aussagen über zu untersuchende Proben zur Verfügung gestellt werden können, ohne hierbei den Sensor insgesamt zu vergrößern.

Hierbei kann die Vorrichtung so weitergebildet sein, dass das geteilte Messelement durch zwei voneinander verschiedene Anregungslichtquellen anregbar ist. Durch Vorsehen von zwei voneinander verschiedenen Anregungslichtquellen können zwei verschiedene Wellenlängen des Anregungslichts ausgesandt werden und somit auch zwei verschiedene Wellenlängen des Fluoreszenzlichts erhalten werden, so dass auch gleichzeitig durchgeführte Messungen mehrere Analyten eindeutig voneinander unterschieden werden können und störungsfrei detektiert werden können. Hierbei können selbstverständlich auch zwei voneinander getrennte Detektoren vorgesehen sein.

Um eine Mehrzahl von Analyten gleichzeitig ohne gegenseitige Störeinflüsse messen zu können, ist die Erfindung dahingehend weitergebildet, dass auf einer Grundplatte eine Mehrzahl von untereinander gleichen oder verschiedenen optochemischen Sensoren angeordnet sind, so dass die unterschiedlichsten Analyten gleichzeitig gemessen werden können.

Eine derartige Anordnung ist insbesondere dann sinnvoll, wenn die Grundplatte eine Leiterplatte ist, wie dies einer Weiterbildung der Erfindung entspricht, wodurch mit einer einzigen elektronischen Einheit eine Mehrzahl von Analyten gleichzeitig gemessen und ausgewertet werden können.

Die Erfindung wird nachfolgend anhand eines in der Zeichnung dargestellten bevorzugten Ausführungsbeispiels näher erläutert, in dieser zeigt:

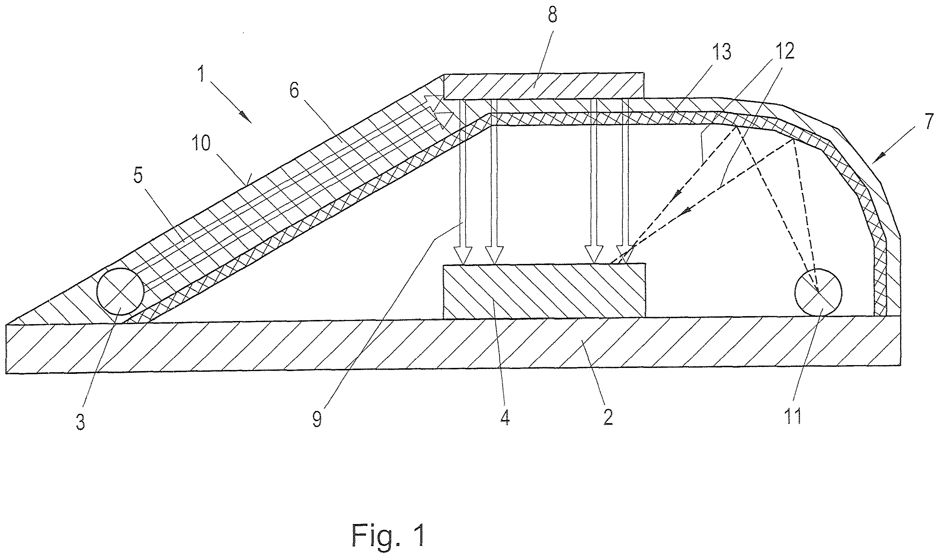

Fig. 1 einen Schnitt durch eine schematische Anordnung eines optochemischen Sensors gemäß eines bevorzugten Ausführungsbeispiels der Erfindung.

In Fig. 1 ist mit 1 ein optochemischer Sensor bezeichnet, bei welchem auf einer Grundplatte 2 eine Anregungslichtquelle 3 ebenso wie ein Detektor 4 festgelegt sind. Licht von der Anregungslichtquelle 3, welches schematisch mit 5 bezeichnet ist, wird hierbei durch eine als Lichtleiter ausgebildeten Bereich 6 einer Abdeckhaube 7 auf ein Messelement 8 eingestrahlt. Das Messelement 8, welches im vorliegenden Fall aus in einem polymeren Basismaterial gelösten bzw. in diesem dispergierten Fluorophor besteht, ist hierbei insbesondere mit einer im Bereich des Messelements 8 aufgerauten Oberfläche der Abdeckhaube 7 vernetzt.

Das Anregungslicht 5 regt die in dem Messelement enthaltenen Moleküle des Fluorophors zur Abgabe von Fluoreszenzlicht an, welches Fluoreszenzlicht mit Molekülen in einer zu untersuchenden Probe in Kontakt tritt und gegebenenfalls durch diese Moleküle gelöscht wird. Nicht gelöschtes Licht wird auf dem Detektor 4 reflektiert und durch die Messung der Intensität der reflektierten Strahlung 9, welche gegebenenfalls noch verstärkt werden kann, lässt sich auf die An- und Abwesenheit eines Analyten in einer zu untersuchenden Probe schließen.

Bei der Ausbildung gemäß Fig. 1 ist hierbei die Anregungslichtquelle 3 in einen Bereich größerer Dicke 6 der Abdeckhaube 7 eingelassen und die Außenoberfläche 10 des Bereichs größerer Dicke 6 der Abdeckhaube 7 ist hoch verspiegelt und insbesondere äußerst glatt ausgebildet, so dass der Bereich 6 der Abdeckhaube 7 selbst als Lichtwellenleiter dienen kann. Gemäß einer Variante ist hierbei im Inneren dieses Bereichs 6 der Abdeckhaube 7 ein gesonderter Lichtwellenleiter vorgesehen, wobei jedoch der Gesamtaufbau des optochemischen Sensors 1 hierdurch nicht verändert wird.

Bei der Darstellung von Fig. 1 ist weiterhin auf der Grundplatte 2 eine Referenzlichtquelle 11 angeordnet, deren Licht an der Innenseite der Abdeckhaube 7 auf den Detektor 4 reflektiert ist, wie dies schematisch mit dem Bezugszeichen 12 dargestellt ist. Die Innenseite der Abdeckhaube 7 ist bei der Darstellung gemäß Fig. 1 weiterhin mit einer als monodirektionale Strahlsperre ausgebildeten Schicht 13 bedampft. Die monodirektionale Strahlsperre 13 ist hierbei als auf der Innenseite extrem glatt ausgebildete Schicht hergestellt, insbesondere auf die Innenoberfläche der Abdeckhaube 7 gedampft, um für das Licht 12 der Referenzlichtquelle 11 total reflektierend zu sein. Das Referenzlicht 12 gelangt somit nicht nach außerhalb des optochemischen Sensors 1 und kann daher eine Messung von Substanzen in keiner Weise stören. Das Gleiche gilt für das Anregungslicht 5 der Anregungslichtquelle 3, welches ebenfalls nicht Störlicht nach außen bzw. in das Innere des optochemischen Sensors abgeben kann, so dass eine Messung, die frei von jeglichen Störlichteinflüssen ist, durchgeführt werden kann. Dies ist insbesondere deshalb von Bedeutung, da das Anregungslicht 5 und das Referenzlicht 12 üblicherweise eine höhere Intensität als das Fluoreszenzlicht des Fluorophors aufweist, so dass auch kleine Störlichteinflüsse die Messung stark verfälschen bzw. ungenau machen könnten.

## Patentansprüche

1. Optochemischer Sensor (1) umfassend ein mit Licht einer Anregungslichtquelle (3) anregbares, mit einem Messmedium in Kontakt befindliches Messelement (8) sowie eine Messanordnung umfassend wenigstens eine Anregungslichtquelle (3) und einen Detektor (4) sowie eine eine die Messanordnung von dem Messelement (8) trennende Abdeckhaube (7), eine parallel zu dem Messelement (8) angeordnete Grundplatte (2), und wobei die Anregungslichtquelle (3) und der Detektor (4) auf die Grundplatte (2) festgelegt sind, wobei die Anregungslichtquelle (3) und der Detektor (4) durch zumindest einen Teil der Materialstärke der Abdeckhaube (7) voneinander getrennt sind, wobei die Messanordnung einen als Lichtleiter ausgebildeten Bereich (6) der Abdeckhaube (7), oder einen im Inneren dieses Bereichs (6) der Abdeckhaube (7) gesonderten Lichtwellenleiter, umfasst, wobei Licht von der Anregungslichtquelle (3) durch den als Lichtleiter ausgebildeten Bereich (6) in einem derartigen Winkel auf das Messelement (8) auftrifft, dass von dem Messelement (8) emittiertes Fluoreszenzlicht (9) senkrecht auf den Detektor (4) auftrifft, **dadurch gekennzeichnet dass** die Messanordnung, eine auf der Grundplatte (2) von der Anregungsquelle (3) und dem Detektor (4) beabstandet angeordnete Referenzlichtquelle (11) umfasst, deren Referenzlicht (12) an der Innenseite der Abdeckhaube (7) reflektiert und auf den Detektor (4) auftrifft, wobei die Referenzlichtquelle (11) auf der Grundplatte (2) von der Anregungslichtquelle (3) und dem Detektor (4) beabstandet angeordnet ist, dass die Anregungslichtquelle (3), der Detektor (4) und die Referenzlichtquelle (11) auf einer Achse angeordnet sind und dass die Abdeckhaube (7) lösbar an der Grundplatte (2) festgelegt ist.

2. Optochemischer Sensor nach Anspruch 1, **dadurch gekennzeichnet, dass** die Anregungslichtquelle (3) in die Materialstärke der Abdeckhaube (7) eingelassen ist.

3. Optochemischer Sensor nach Anspruch 1 oder 2, **dadurch gekennzeichnet, dass** ein zwischen Anregungslichtquelle (3) und Messelement (8) liegender Bereich der Abdeckhaube (7) eine geglättete Oberfläche aufweist und als Lichtwellenleiter ausgebildet ist.

4. Optochemischer Sensor nach Anspruch 1, 2 oder 3, **dadurch gekennzeichnet, dass** das Messelement (8) unmittelbar auf einem Endbereich von den Lichtwellenleiter ausbildenden Glasfaserelementen aufgebracht ist und dass die Abdeckhaube (7) wenigstens teilweise aus Glas und/oder Glasfasern enthaltendem Polycarbonat gebildet ist.

5. Optochemischer Sensor nach einem der Ansprüche 1 bis 4, **dadurch gekennzeichnet, dass** eine Innenoberfläche der Abdeckhaube (7) als monodirektionale Strahlsperre ausgebildet ist oder eine monodirektionale Strahlsperre aufweist.

6. Optochemischer Sensor nach Anspruch 5, **dadurch gekennzeichnet, dass** die Innenoberfläche der Abdeckhaube (7) verspiegelt oder mit einer für Licht von der Referenzlichtquelle (11) total reflektierenden Schicht bedampft ist.

7. Optochemischer Sensor nach einem der Ansprüche 1 bis 6, **dadurch gekennzeichnet, dass** die Abdeckhaube (7) im Bereich des Messelements (8) mit einer aufgerauten, für Fluoreszenzlicht (9) durchlässigen Außenoberfläche (10) ausgebildet ist.

8. Optochemischer Sensor nach einem der Ansprüche 1 bis 7, **dadurch gekennzeichnet, dass** das Messelement (8) aus einem in einem mit einem Material der Abdeckhaube (7) vernetzbaren einen Fluorophor enthaltenden, insbesondere gelöst enthaltenden Basismaterial gebildet ist.

9. Optochemischer Sensor nach einem der Ansprüche 1 bis 8, **dadurch gekennzeichnet, dass** das Basismaterial des Messelements (8) aus Kieselsäureethylester oder Tetraethylorthosilikat gewählt ist.

10. Optochemischer Sensor nach einem der Ansprüche 1 bis 9, **dadurch gekennzeichnet, dass** das Messelement (8) als geteiltes Messelement enthaltend zwei gegebenenfalls voneinander verschiedene Fluorophore ausgebildet ist.

11. Optochemischer Sensor nach Anspruch 10, **dadurch gekennzeichnet, dass** das geteilte Messelement durch zwei voneinander verschiedene Anregungslichtquellen (3) anregbar ist.

12. Optochemischer Sensor nach einem der Ansprüche 1 bis 11, **dadurch gekennzeichnet, dass** auf einer Grundplatte (2) eine Mehrzahl von untereinander gleichen oder verschiedenen optochemischen Sensoren (1) angeordnet sind.

13. Optochemischer Sensor nach einem der Ansprüche 1 bis 12, **dadurch gekennzeichnet, dass** die Grundplatte (2) eine Leiterplatte ist.

## Claims

1. An optochemical sensor (1) comprising a measuring element (8) excitable by the light of an excitation light source (3) and in contact with a medium to be measured, and a measuring arrangement including at least one excitation light source (3) and a detector (4) as well as a hood (7) separating the measuring arrangement from the measuring element (8), a base plate (2) arranged in parallel with the measuring element (8) and whereby the excitation light source (3) and the detector (4) are fixed to the base plate (2) whereby the excitation light source (3) and the detector (4) are separated from each other by at least a portion of the material thickness of the hood (7) whereby the measuring arrangement comprises a region of the hood (7) which is designed as optical waveguide or comprises a separate optical waveguide being arranged in the inner of that region of the hood (7), whereby light of the excitation light source (3) passing through the region (6) of the hood (7) being formed as optical waveguide impinges in such an angle on the measuring element (8), that fluorescence light (9) being emitted from the measuring element (8) impinges vertically on the detector (4), **characterized in that** the measuring arrangement comprises a reference light source (11) being disposed on the base plate (2) at a distance from the excitation light source (3) and the detector (4), which reference light (12) reflects on the inner side of the hood (7) and impinges on the detector (4), whereby the reference light source (11) is arranged on the base plate (2) in distance to the excitation light source (3) and the detector (4), that the excitation light source (3), the detector (4) and the reference light source (11) are arranged on one axis, and that the hood (7) is detachably fixed to the base plate (2) and that light from the excitation light source (3) impinges on the measuring element (8) through an optical waveguide (6) at such an angle that fluorescence light emitted by the measuring element (8) impinges perpendicularly on the detector (4).

2. An optochemical sensor according to claim 1, **characterized in that** the excitation light source (3) is embedded in the material thickness of the hood (7).

3. An optochemical sensor according to claim 1 or 2, **characterized in that** a portion of the hood (7) located between the excitation light source (3) and the measuring element (8) comprises a smoothened surface and is designed as an optical waveguide.

4. An optochemical sensor according to claim 1, 2 or 3, **characterized in that** the measuring element (8) is directly applied to an end portion of the fiber-optic elements forming the optical waveguide, and that the hood is at least partially comprised of glass and/or of polycarbonate containing glass fibers.

5. An optochemical sensor according to any one of claims 1 to 4, **characterized in that** an inner surface of the hood (7) is designed as, or comprises, a unidirectional radiation barrier.

6. An optochemical sensor according to claim 5, **characterized in that** the inner surface of the hood (7) is mirrored or comprises a vaporized layer totally reflecting the light from the reference light source (11).

7. An optochemical sensor according to any one of claims 1 to 6, **characterized in that** the hood (7), in the region of the measuring element (8), is formed with a roughened outer surface (10) permeable to fluorescence light (9).

8. An optochemical sensor according to any one of claims 1 to 7, **characterized in that** the measuring element (8) is comprised of a base material capable of being cross-linked with a material of the hood (7) and containing a fluorophore, in particular in the dissolved state.

9. An optochemical sensor according to any one of claims 1 to 8, **characterized in that** the base material of the measuring element (8) is selected from silicic acid ethyl ester (PEOS) or tetraethyl orthosilicate (TEOS).

10. An optochemical sensor according to any one of claims 1 to 9, **characterized in that** the measuring element (8) is designed as a divided measuring element comprising two fluorophores optionally differing from each other.

11. An optochemical sensor according to claim 10, **characterized in that** the divided measuring element is excitable by two different excitation light sources (3).

12. An optochemical sensor according to any one of claims 1 to 11, **characterized in that** a plurality of identical or different optochemical sensors (1) are arranged on a base plate (2).

13. An optochemical sensor according to any one of claims 1 to 12, **characterized in that** the base plate (2) is comprised of a printed circuit board.

## Revendications

1. Capteur optochimique (1) comprenant un élément de mesure (8) se trouvant en contact avec un fluide de mesure, excitable par la lumière d'une source lumineuse d'excitation (3), et un dispositif de mesure comprenant au moins une source lumineuse d'excitation (3) et un détecteur (4) et un couvercle (7) séparant le dispositif de mesure de l'élément de mesure (8), une plaque de base (2) disposée parallèlement à l'élément de mesure (8), et dans lequel la source lumineuse d'excitation (3) et le détecteur (4) sont fixés sur la plaque de base (2), dans lequel la source lumineuse d'excitation (3) et le détecteur (4) sont séparés l'un de l'autre par au moins une partie de l'épaisseur de matériau du couvercle (7), dans lequel le dispositif de mesure comprend une zone (6) du couvercle (7) réalisée comme un guide de lumière, ou un guide d'ondes lumineuses isolé à l'intérieur de ladite zone (6) du couvercle (7), dans lequel la lumière de la source lumineuse d'excitation (3) est incidente sur l'élément de mesure (8) en passant à travers la zone (6) réalisée comme un guide de lumière en un tel angle que la lumière de fluorescence (9) émise par l'élément de mesure (8) est incidente verticalement sur le détecteur (4), **caractérisé en ce que** le dispositif de mesure comprend une source lumineuse de référence (11) disposée sur la plaque de base (2) à distance de la source d'excitation (3) et du détecteur (4), dont la lumière de référence (12) se réfléchit contre la face intérieure du couvercle (7) et est incidente sur le détecteur (4), dans lequel la source lumineuse de référence (11) est disposée sur la plaque de base (2) à distance de la source lumineuse d'excitation (3) et du détecteur (4), **en ce que** la source lumineuse d'excitation (3), le détecteur (4) et la source lumineuse de référence (11) sont disposés sur un axe et **en ce que** le couvercle (7) est fixé amovible sur la plaque de base (2).

2. Capteur optochimique selon la revendication 1, **caractérisé en ce que** la source lumineuse d'excitation (3) est incorporée dans l'épaisseur du matériau du couvercle (7).

3. Capteur optochimique selon la revendication 1 ou 2, **caractérisé en ce qu'**une zone du couvercle (7) située entre la source lumineuse d'excitation (3) et l'élément de mesure (8) présente une surface lissée et est réalisée comme guide d'ondes lumineuses.

4. Capteur optochimique selon la revendication 1, 2 ou 3, **caractérisé en ce que** l'élément de mesure (8) est déposé directement sur une zone d'extrémité des éléments en fibres de verre formant le guide d'ondes lumineuses et **en ce que** le couvercle (7) est formé au moins partiellement de verre et/ou de polycarbonate contenant des fibres de verre.

5. Capteur optochimique selon l'une des revendications 1 à 4, **caractérisé en ce qu'**une surface interne du couvercle (7) est réalisée comme barrière de faisceau unidirectionnelle ou présente une barrière de faisceau unidirectionnelle.

6. Capteur optochimique selon la revendication 5, **caractérisé en ce que** la surface interne du couvercle (7) est réfléchissante ou vaporisée avec une couche totalement réfléchissante pour la lumière de la source lumineuse de référence (11).

7. Capteur optochimique selon l'une des revendications 1 à 6, **caractérisé en ce que** le couvercle (7) est formé dans la zone de l'élément de mesure (8) avec une surface externe (10) rendue rugueuse, perméable à la lumière de fluorescence (9).

8. Capteur optochimique selon l'une des revendications 1 à 7, **caractérisé en ce que** l'élément de mesure (8) est constitué d'un matériau de base contenant un fluorophore, en particulier sous forme dissoute, réticulable avec un matériau du couvercle (7).

9. Capteur optochimique selon l'une des revendications 1 à 8, **caractérisé en ce que** le matériau de base de l'élément de mesure (8) est choisi parmi l'ester éthylique d'acide silicique ou l'orthosilicate tétraéthylique.

10. Capteur optochimique selon l'une des revendications 1 à 9, **caractérisé en ce que** l'élément de mesure (8) est réalisé comme un élément de mesure divisé contenant deux fluorophores le cas échéant différents l'un de l'autre.

11. Capteur optochimique selon la revendication 10, **caractérisé en ce que** l'élément de mesure divisé peut être excité par deux sources lumineuses d'excitation (3) différentes l'une de l'autre.

12. Capteur optochimique selon l'une des revendications 1 à 11, **caractérisé en ce qu'**une pluralité de capteurs optochimiques (1) identiques ou différents les uns des autres est disposée sur une plaque de base (2).

13. Capteur optochimique selon l'une des revendications 1 à 12, **caractérisé en ce que** la plaque de base (2) est une plaque de circuit.
